# EUROPEAN PATENT SPECIFICATION

(11) **EP 3 012 542 B1**
(45) Date of publication and mention of the grant of the patent: **14.08.2019**
(21) Application number: 14814377.9
(22) Date of filing: 10.06.2014
(51) Int. Cl.: F24F 1/22, F24F 1/56, F24H 4/02, F24D 3/18, F24F 1/40

(54) **HEAT PUMP DEVICE**
WÄRMEPUMPENVORRICHTUNG
DISPOSITIF DE POMPE À CHALEUR

(30) Priority: 17.06.2013 JP 2013126355
(43) Date of publication of application: 27.04.2016
(73) Proprietor: Panasonic Intellectual Property Management Co., Ltd., Osaka-shi, Osaka 540-6207 (JP)
(72) Inventor: NOMURA, Masakazu, Osaka-shi, Osaka 540-6207 (JP); MIHARA, Hiroshi, Osaka-shi, Osaka 540-6207 (JP)
(74) Representative: Eisenführ Speiser
(86) International application number: PCT/JP2014/003078
(87) International publication number: WO 2014/203493

(56) References cited:
- WO-A1-2008/038580
- JP-A- H04 236 031
- JP-A- H05 203 198
- JP-A- 2003 254 563
- JP-A- 2003 254 563
- JP-A- 2005 180 725
- JP-U- S5 618 868
- US-A- 6 098 416

## Description

### TECHNICAL FIELD

The present invention relates to a heat pump device. Document US 6 098 416 A discloses a heat pump device according to the preamble of claim 1.

### BACKGROUND ART

To heat an indoor space by delivering heating medium of high temperature to a heating unit, a type of heat pump device hitherto available includes a compressor, an expansion valve representing a pressure-reducing device, a refrigerant circuit configured of a circularly connected air-refrigerant heat exchanger representing an evaporator, a water-refrigerant heat exchanger for exchanging heat between refrigerant of high temperature and high pressure produced in the refrigerant circuit and heating medium of low temperature to produce the heating medium of high temperature, and a circulating pump for delivering the heating medium of high temperature produced in the water-refrigerant heat exchanger to the heating unit (refer to patent literature 1 for example).

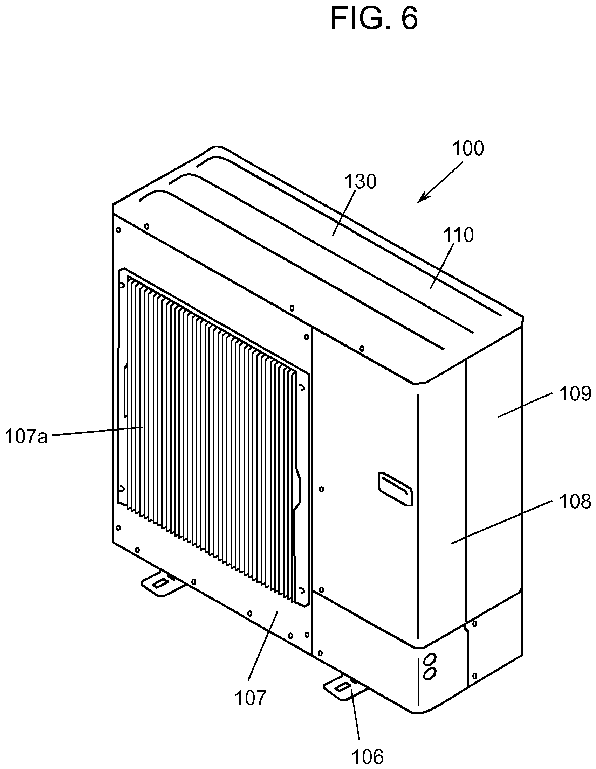

FIG. 6 is a perspective view showing an outer appearance of conventional heat pump device 100 disclosed in the patent literature 1.

As shown in FIG. 6, heat pump device 100 is enclosed within outer casing 130 constructed of front panel 107, side front panel 108, side back panel 109, top panel 110 and base plate 106.

Front panel 107 is disposed at a front left side of heat pump device 100, and it has blow opening 107a to discharge air that flows in a ventilation circuit to the outside.

Side front panel 108 is disposed to cover from a right front face to a front half of a right side face of heat pump device 100. Side back panel 109 is disposed to cover from a back face to a back half of the right side face of heat pump device 100. In other words, the front half of the right side face of heat pump device 100 is covered with a part of side front panel 108, and the back half of the right side face is covered with a part of side back panel 109.

Front panel 107, side back panel 109, and a refrigerant circuit and a water-refrigerant heat exchanger, though not shown in the figure, are disposed and fixed to base plate 106. Top panel 110 covers an upper face of heat pump device 100.

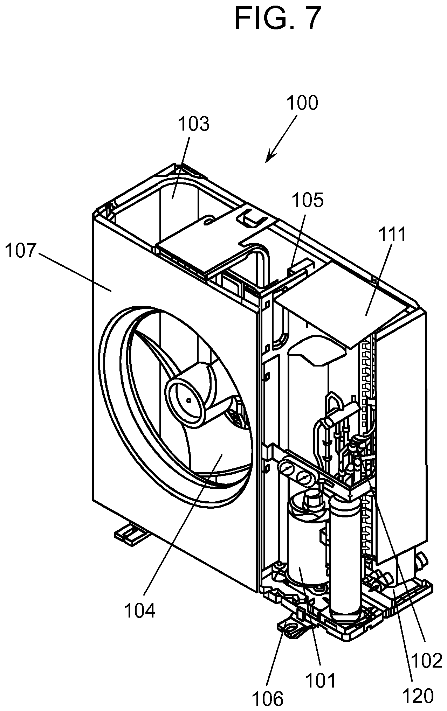

FIG. 7 is a perspective view showing an internal structure of conventional heat pump device 100 disclosed in the patent literature 1.

An inner space of outer casing 130 is divided by soundproof board 105, as shown in FIG. 7. One side of the space divided by soundproof board 105 is a ventilation room. Air heat exchanger 103 and fan 104 are disposed in the ventilation room to form a ventilation circuit.

The other space divided by soundproof board 105 is a machinery room. Disposed inside the machinery room are compressor 101 for compressing refrigerant to generate the refrigerant of high temperature and high pressure, heat exchanger 120 for exchanging heat between the refrigerant and heating medium, and expansion valve 102 representing a pressure reducing device for decompressing the refrigerant.

On an upper part of the machinery room, controller 111 having a microcomputer and a memory that stores a control program is disposed to control heat pump device 100.

### Citation List:

### Patent Literature

PTL 1: Unexamined Japanese Patent Publication, No. 2008-196777

### SUMMARY OF THE INVENTION

In the conventional structure described above, refrigerant tubes that compose the refrigerant circuit are disposed throughout from a lower part to an upper part of the machinery room. There is therefore a drawback that maintenance inspection of electric wiring and a connector section of the electric wiring is difficult even when the outer casing is removed and the machinery room exposed.

The present invention has an object to resolve the above drawback of the conventional art, and to provide a heat pump device that can be inspected and maintained easily.

To resolve the above drawback of the conventional art, the heat pump device of the present invention is provided with a refrigerant circuit including a compressor for compressing refrigerant, a pressure-reducing device for expanding the compressed refrigerant and an evaporator for exchanging heat between the refrigerant and air, a fan for blowing the air to the evaporator, a soundproof board that separates a machinery room having the compressor from a ventilation room having the fan, an outer casing that encloses the machinery room and the ventilation room and has an opening provided with a removable cover, and a connector section that connects the compressor to electric wiring for supplying electric power to the compressor.

In the present invention, the connector section is disposed on the outside of the compressor inside the outer casing, wherein the compressor is disposed in such orientation that the connector section confronts the opening so as to become accessible from the outside of the outer casing when the cover is removed.

According to the present invention, maintenance inspection of the heat pump device becomes easier since the connector section between the compressor and the electric wiring for supplying electric power to the compressor becomes readily examinable and workable when the cover is removed.

### BRIEF DESCRIPTION OF DRAWINGS

FIG. 1 is a general schematic diagram of a hot-water heating apparatus using a heat pump device according to a first exemplary embodiment of the present invention.
FIG. 2 is a perspective view showing an outer appearance of the heat pump device according to the first exemplary embodiment.
FIG. 3 is a perspective view showing an internal structure of the heat pump device according to the first exemplary embodiment.
FIG. 4 is a perspective view of a compressor in the heat pump device according to the first exemplary embodiment.
FIG. 5A is a perspective view of a heat pump device, of which a side front panel is removed, according to a second exemplary embodiment of the present invention.
FIG. 5B is an enlarged view of a main part of FIG. 5A.
FIG. 6 is a perspective view showing an outer appearance of a conventional heat pump device.
FIG. 7 is a perspective view showing an internal structure of the conventional heat pump device.

### DESCRIPTION OF EMBODIMENTS

A first aspect of the invention covers a heat pump device that has a refrigerant circuit including a compressor for compressing refrigerant, a pressure-reducing device for expanding the compressed refrigerant and an evaporator for exchanging heat between the refrigerant and air, a fan for blowing the air to the evaporator, a soundproof board that separates a machinery room having the compressor from a ventilation room having the fan, an outer casing that encloses the machinery room and the ventilation room, and has an opening provided with a removable cover, and a connector section that connects the compressor to electric wiring for supplying electric power to the compressor.

In the present invention, the connector section is disposed on the outside of the compressor inside the outer casing, wherein the compressor is disposed in such orientation that the connector section confronts the opening so as to become accessible from the outside of the outer casing when the cover is removed.

According to the present invention, the connector section between the compressor and the electric wiring for supplying electric power to the compressor (hereinafter referred to as "supply connector section") can be examined and worked easily when the cover is removed.

In addition, the heat pump device is provided with a predetermined space between the outer casing and components inside the outer casing in order to prevent a decrease in heat-exchanging performance attributed to heat transferred from outside air and the like. This space can be used effectively to make maintenance inspection easier, according to this invention.

According to a second aspect of the invention, in the heat pump device of the first aspect, the outer casing is constructed by joining a plurality of panel members including a first panel member and a second panel member, the opening is disposed in the first panel member, the cover is mounted on the opening by being fastened to the first panel member, and the second panel member is joined to the first panel member such that the second panel member covers a fastening portion of the cover to the first panel member.

According to the present invention, it becomes not possible to remove the cover alone once the outer casing is assembled by joining together the plurality of panel members. In other words, the cover can be removed only when one of the plurality of panel members constructing the outer casing is removed. It is by virtue of this structure to make the fastening portion difficult to handle easily by anyone other than qualified personnel, thereby ensuring the safety of heat pump device 1b.

Referring to the accompanying drawings, description is provided hereinafter about exemplary embodiments of the present invention. These exemplary embodiments should not be construed as limiting the scope of the present invention.

### FIRST EXEMPLARY EMBODIMENT

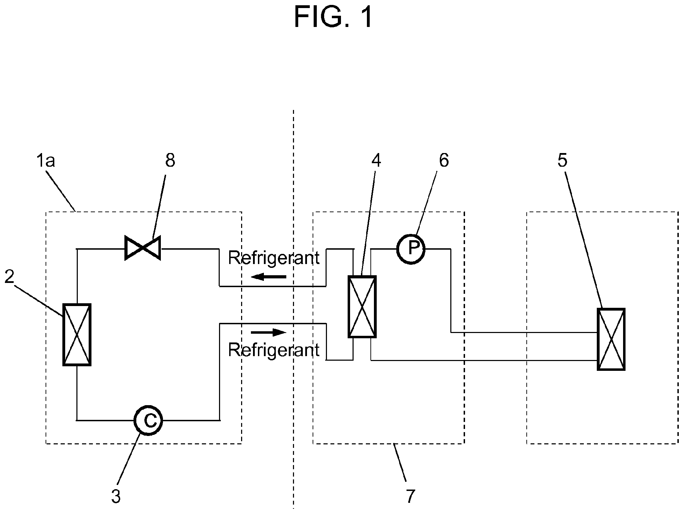

FIG. 1 is a general schematic diagram of a hot-water heating apparatus using a heat pump device according to the first exemplary embodiment of the present invention. In this embodiment, description is provided of a case wherein the heat pump device is adapted to the hot-water heating apparatus that supplies hot water to a heating unit for air-conditioning an indoor space.

As shown in FIG. 1, the hot-water heating apparatus according to this embodiment includes heat pump device 1a, heat exchange unit 7, and heating unit 5. Heat pump device 1a and heat exchange unit 7 are connected with refrigerant tubes, and heat exchange unit 7 and heating unit 5 are connected with heating medium tubes.

Heat exchange unit 7 is provided with water-refrigerant heat exchanger 4 for exchanging heat between refrigerant of high temperature and high pressure generated by heat pump device 1a and heating medium such as water and antifreeze solution, and circulation pump 6 for circulating the heating medium between water-refrigerant heat exchanger 4 and heating unit 5.

Heat pump device 1a has a refrigerant circuit, in which expansion valve 8 representing a pressure reducing device for expanding the refrigerant, air heat exchanger 2 representing an evaporator for exchanging heat between the refrigerant and air, and compressor 3 for compressing the refrigerant are connected with refrigerant tubes. Any of substances designated as R410A, carbon dioxide and the like can be used as the refrigerant to be circulated in the refrigerant circuit.

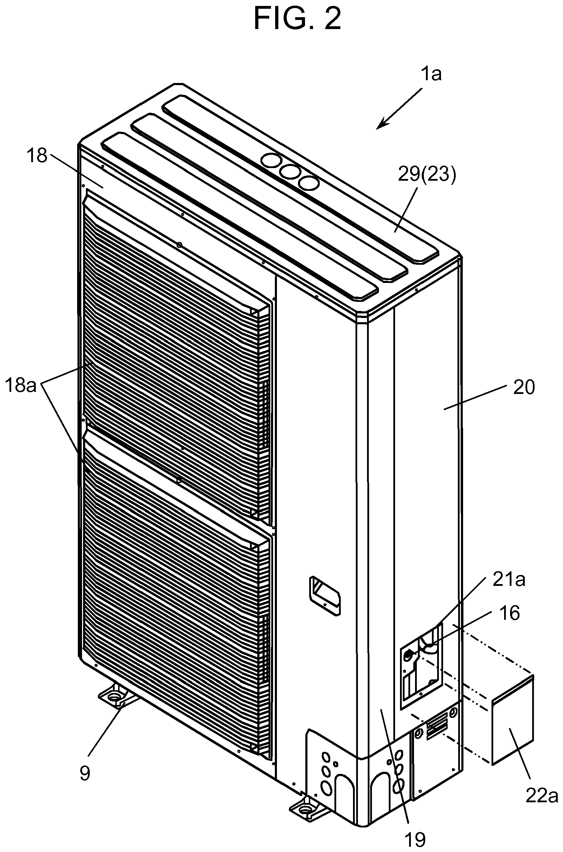

Description is provided next about a structure of heat pump device 1a with reference to FIG. 2 to FIG. 4.

FIG. 2 is a perspective view showing an outer appearance of the heat pump device according to this embodiment.

As shown in FIG. 2, heat pump device 1a is enclosed with outer casing 29 constructed of a plurality of panel members that are joined together. In this embodiment, outer casing 29 is constructed of the plurality of panel members (i.e., front panel 18, side front panel 19, side back panel 20, top panel 23 and base plate 9).

Front panel 18 is disposed at a left front face of heat pump device 1a, and provided with blow openings 18a for discharging the air that flows in the ventilation circuit to the outside.

Side front panel 19 is disposed to cover from a right front face to a front half of a right side face of heat pump device 1a. Side back panel 20 is disposed to cover from a back face to a back half of the right side face of heat pump device 1a. In other words, a front half of the right side face of heat pump device 1a is covered with a part of side front panel 19, and a back half of the right side face is covered with a part of side back panel 20.

Top panel 23 is disposed above front panel 18, side front panel 19 and side back panel 20. These panel members are fixed to one another with fasteners such as bolts. Front panel 18, side front panel 19 and side back panel 20 are then placed on base plate 9, and fixed together in the same manner.

Opening 21a is a hole formed in side back panel 20 adjacent to side front panel 19, and it is covered with removable cover 22a.

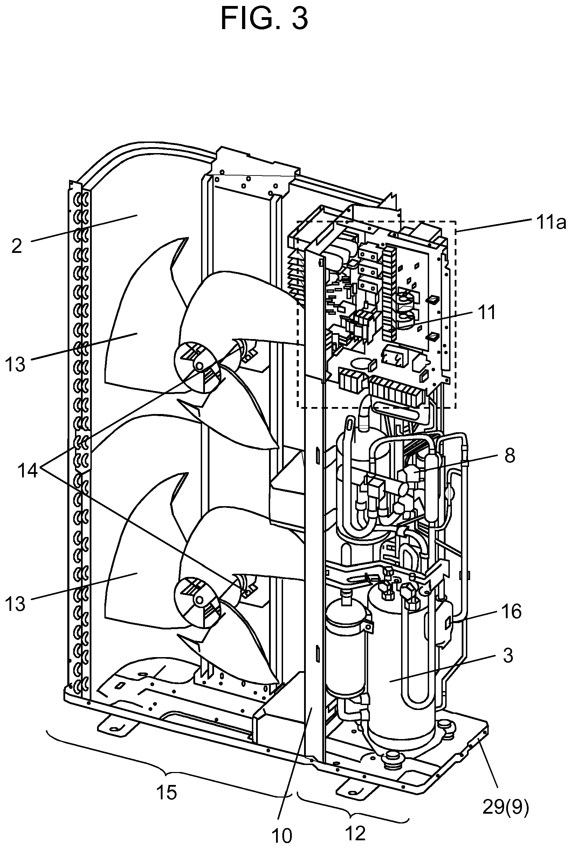

FIG. 3 is a perspective view showing an inside of heat pump device 1a with outer casing 29 other than base plate 9 removed, according to this embodiment.

As shown in FIG. 3, the refrigerant circuit configured of air heat exchanger 2, compressor 3, expansion valve 8, etc. as well as fans 13, controller 11, and the like components are disposed on base plate 9. Note that air heat exchanger 2 is not covered by outer casing 29 and exposed to the outside, though not show in FIG. 2.

An inner space of heat pump device 1a is divided into machinery room 12 and ventilation room 15 by soundproof board 10 disposed on base plate 9.

Air heat exchanger 2, fans 13 for blowing air toward air heat exchanger 2, and motors 14 for driving fans 13 are disposed inside ventilation room 15. These components form the ventilation circuit. Air heat exchanger 2 is fixed directly to base plate 9, and fans 13 and motors 14 are fixed to base plate 9 via a support member.

Compressor 3, expansion valve 8 and controller 11 are disposed inside machinery room 12. Compressor 3 is fixed to base plate 9, and controller 11 is housed in power supply box 11a disposed at an upper area of machinery room 12.

Controller 11 includes a microcomputer and a memory for storing a control program, and it controls compressor 3, expansion valve 8, and motors 14. Controller 11 is located above compressor 3, expansion valve 8 and the refrigerant tubes.

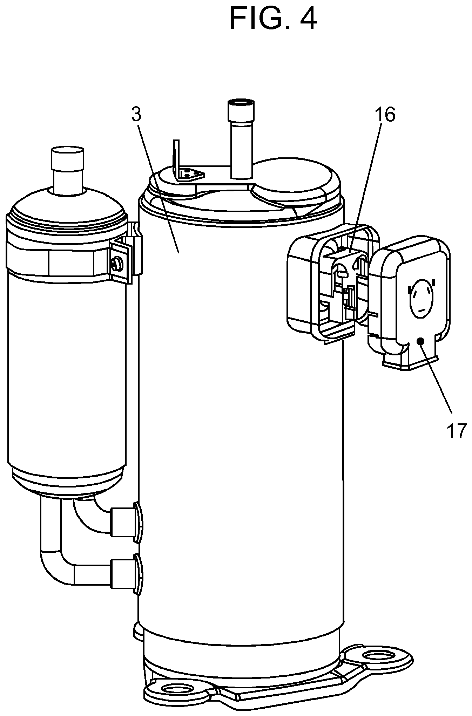

FIG. 4 is a perspective view of the compressor in the heat pump device according to this embodiment.

Supply connector section 16 for receiving electric power supplied from power supply box 11a to compressor 3 is disposed on an outside of compressor 3, as shown from FIG. 2 to FIG. 4. Contact points of supply connector section 16 are covered with cover 17 made of a resin.

Compressor 3 is disposed inside machinery room 12 in such orientation that supply connector section 16 confronts a right side face of heat pump device 1a, specifically at a location where opening 21a is formed in side back panel 20 and adjacent to cover 22a that covers opening 21a.

According to this embodiment, maintenance inspection of heat pump device 1a becomes easier since connector section 16 can be examined and worked easily when cover 22a is removed, as described above.

In addition, heat pump device 1a is provided with a predetermined space between the outer casing and components inside the outer casing in order to prevent a decrease in heat-exchanging performance attributed to heat transferred from outside air and the like. According to the present embodiment, this space can be used effectively to make maintenance inspection easier.

In this embodiment, supply connector section 16 is disposed in the orientation to the right side such that it confronts opening 21a formed in the right side face of heat pump device 1a.

However, the location of supply connector section 16 is not restricted by this embodiment as long as it is located to help the worker to perform inspection and handling easily. Like advantages can be achieved even when opening 21a is disposed in the front face of heat pump device 1a (i.e., front panel 18 or side front panel 19), and supply connector section 16 is located in an orientation toward the front side to confront opening 21a, for instance.

### SECOND EXEMPLARY EMBODIMENT

Description is provided hereinafter about the second exemplary embodiment of the present invention by referring to the accompanying drawings.

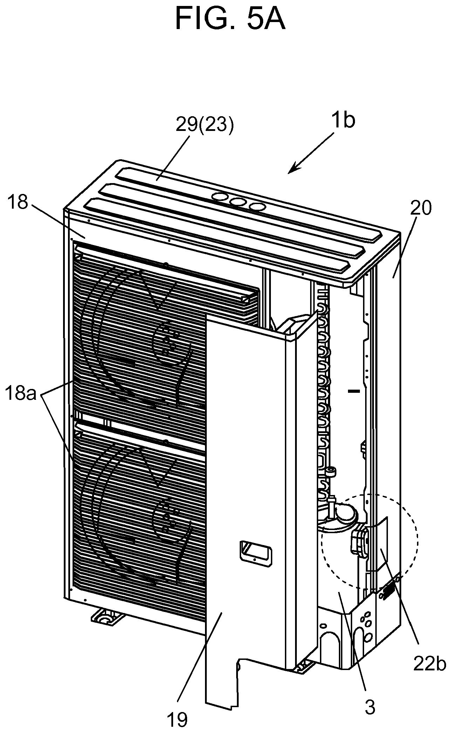

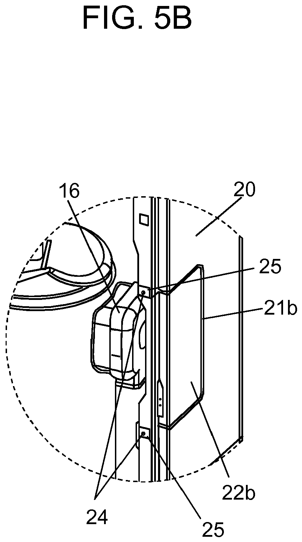

FIG. 5A is a perspective view of heat pump device 1b with side front panel 19 removed, according to this embodiment. FIG. 5B is an enlarged view of a main part of FIG. 5A. In this embodiment, like reference marks are used to designate like components as those of the first embodiment, and details of them will be omitted.

As shown in FIG. 5A and FIG. 5B, opening 21b is provided in side back panel 20. In this embodiment, opening 21b has a shape of cutaway recess formed in side back panel 20, and that adjoins side front panel 19, whereas opening 21a in the first embodiment is an opening formed in side back panel 20. Here, side back panel 20 corresponds to the first panel member, and side front panel 19 corresponds to the second panel member.

Screw holes 24, referred to as fastening portions, are disposed at upper and lower sides of opening 21b in a face of side front panel 19 that adjoins side back panel 20. Cover 22b is provided with tabs 25, each having a through-hole at a location corresponding to respective one of screw holes 24. Cover 22b is fixed to side back panel 20 when tabs 25 are fastened to screw holes 24 with screws, so as to close opening 21b.

According to this embodiment, the fastening portions are concealed under side front panel 19 and not exposed outside, when side front panel 19 is attached to heat pump device 1b with cover 22b fixed to side back panel 20. In other words, cover 22b becomes removable only when a panel member (i.e., side front panel 19) that composes outer casing 29 is removed. This structure makes the fastening portions difficult to handle readily by anyone other than qualified personnel, thereby ensuring the safety of heat pump device 1b.

In this embodiment, cover 22b is fixed to screw holes 24 with screws. However, types and configurations of the fastening portions and the fasteners are not limited to those described in this embodiment. For instance, the two adjoining panel members may be fastened by having a hook provided on one of the panel members engage with the other panel member. In other words, all what is required is to have a structure that can prevent the fastening portions from being exposed outside of outer casing 29.

In any of the exemplary embodiments, opening 21a (or 21b) is formed in outer casing 29 at the right side of heat pump device 1a (or 1b), and supply connector section 16 is disposed adjacent to opening 21a (or 21b). However, opening 21a (or 21b) may be formed in any location other than the right side of outer casing 29, such as the front face where blow openings 18a are provided in front panel 18, for instance, as long as the connector section (16) confronts the opening (21a,21b) so as to become accessible from the outside of the outer casing when the cover (22a)22b) is removed.

Moreover, in any of the exemplary embodiments, front panel 18 and side back panel 20 are configured to abut against each other at the right side of heat pump device 1a (or 1b). However, outer casing 29 may be so configured that front panel 18 covers only the front face of heat pump device 1a (or 1b), and side back panel 20 covers the entire right side face of heat pump device 1a (or 1b), for example.

Furthermore, water-refrigerant heat exchanger 4 and circulation pump 6 may be included in heat pump device 1a (or 1b), though they are not provided in heat pump device 1a (or 1b) of any of these embodiments.

As has been described, maintenance inspection of heat pump device 1a becomes easier by virtue of these embodiments, since supply connector section 16 can be examined and worked easily when cover 22a is removed.

Because of the structure that the fastening portions are not exposed outside of outer casing 29, it becomes difficult for anyone other than qualified personnel to handle the fastening portions readily, thereby ensuring the safety of heat pump device 1a (or 1b).

In addition, the space provided between the outer casing and the components inside the outer casing can be used effectively to further ease the maintenance inspection according to these embodiments, although the space is provided for the purpose of preventing a decrease in the heat-exchanging performance attributed to heat transferred from outside air and the like.

### INDUSTRIAL APPLICABILITY

As illustrated above, the present invention is applicable to heat pump devices used for hot-water heating apparatuses, water heaters, air conditioners and the like apparatuses.

### REFERENCE MARKS IN THE DRAWINGS

- 1a, 1b, 100: heat pump device
- 2, 103: air heat exchanger
- 3, 101: compressor
- 8, 102: expansion valve
- 9, 106: base plate
- 10, 105: soundproof board
- 12: machinery room
- 13, 104: fan
- 14: motor
- 15: ventilation room
- 16: supply connector section
- 17, 22a, 22b: cover
- 18, 107: front panel
- 18a, 107a: blow opening
- 19, 108: side front panel
- 20, 109: side back panel
- 21a, 21b: opening
- 23, 110: top panel
- 24: screw hole
- 25: tab
- 29, 130: outer casing

## Claims

1. A heat pump device (1a, 1b) comprising:
a refrigerant circuit including a compressor (3) for compressing a refrigerant, a pressure-reducing device (8) for expanding the compressed refrigerant, and an evaporator (2) for exchanging heat between the refrigerant and air;
a fan (13) for blowing air to the evaporator (2);
a soundproof board (10) that separates a machinery room (12) having the compressor (3) from a ventilation room (15) having the fan (13);
an outer casing (29) that encloses the machinery room (12) and the ventilation room (15), and has an opening (21a, 21b) provided with a removable cover (22a, 22b); and
a connector section (16) that connects the compressor (3) to electric wiring for supplying electric power to the compressor (3),
**characterized in that**
the connector section (16) is disposed on the outside of the compressor (3) inside the outer casing (29),
wherein the compressor (3) is disposed in such orientation that the connector section (16) confronts the opening (21a, 21 b) so as to become accessible from outside of the outer casing (29) when the cover (22a, 22b) is removed.

2. The heat pump device (1b) of claim 1, wherein
the outer casing (29) is constructed of a plurality of panel members (9, 18, 19, 20, 23) including a first panel member (20) and a second panel member (19), the opening (21b) is disposed in the first panel member (20),
the cover (22b) is mounted on the opening (21b) by being fastened to the first panel member (20), and
the second panel member (19) abuts on the first panel member (20) such that the second panel member (19) covers a fastening portion of the cover (22b) to the first panel member (20).

## Patentansprüche

1. Wärmepumpenvorrichtung (1a, 1b), umfassend:
einen Kältemittelkreislauf mit einem Verdichter (3) zum Verdichten eines Kältemittels, einer Druckminderungsvorrichtung (8) zum Entspannen des komprimierten Kältemittels, und einem Verdampfer (2) zum Austauschen von Wärme zwischen dem Kältemittel und Luft;
ein Gebläse (13) zum Blasen von Luft auf den Verdampfer (2);
eine schalldichte Platte (10), die einen Maschinenraum (12) mit dem Verdichter (3) von einem Lüftungsraum (15) mit dem Gebläse (13) trennt;
ein Außengehäuse (29), das den Maschinenraum (12) und den Lüftungsraum (15) umschließt und eine Öffnung (21a, 21b) aufweist, die mit einer abnehmbaren Abdeckung (22a, 22b) versehen ist; und
einen Verbinderabschnitt (16), der den Verdichter (3) mit einer elektrischen Verkabelung verbindet, um dem Verdichter (3) elektrische Energie zuzuführen,
**dadurch gekennzeichnet, dass**
der Verbinderabschnitt (16) an der Außenseite des Verdichters (3) innerhalb des Außengehäuses (29) angeordnet ist,
wobei der Verdichter (3) in einer solchen Ausrichtung angeordnet ist, dass der Verbinderabschnitt (16) der Öffnung (21a, 21b) gegenüberliegt, um von außerhalb des Außengehäuses (29) zugänglich zu werden, wenn die Abdeckung (22a, 22b) abgenommen wird.

2. Wärmepumpenvorrichtung (1b) nach Anspruch 1, wobei
das Außengehäuse (29) aus mehreren Plattenelementen (9, 18, 19, 20, 23) aufgebaut ist, die ein erstes Plattenelement (20) und ein zweites Plattenelement (19) enthalten,
die Öffnung (21b) in dem ersten Plattenelement (20) angeordnet ist,
die Abdeckung (22b) an der Öffnung (21b) montiert ist, indem sie an dem ersten Plattenelement (20) befestigt ist, und
das zweite Plattenelement (19) an dem ersten Plattenelement (20) anliegt, so dass das zweite Plattenelement (19) einen Befestigungsabschnitt der Abdeckung (22b) an dem ersten Plattenelement (20) abdeckt.

## Revendications

1. Dispositif de pompe à chaleur (1a, 1b) comprenant:
un circuit de réfrigérant comprenant un compresseur (3) pour comprimer un réfrigérant, un dispositif de réduction de pression (8) pour détendre le réfrigérant comprimé et un évaporateur (2) pour échanger de la chaleur entre le réfrigérant et l'air;
un ventilateur (13) pour souffler de l'air vers l'évaporateur (2);
une plaque d'insonorisation (10) qui sépare une chambre de machines (12) présentant le compresseur (3) d'une chambre de ventilation (15) présentant le ventilateur (13);
une enveloppe extérieure (29) qui renferme la chambre des machines (12) et la chambre de ventilation (15) et qui possède une ouverture (21a, 21b) pourvue d'un couvercle amovible (22a, 22b); et
une section de connecteur (16) qui relie le compresseur (3) à un câblage électrique pour fournir de l'énergie électrique au compresseur (3),
**caractérisé en ce que**
la section de connecteur (16) est disposée à l'extérieur du compresseur (3) à l'intérieur de l'enveloppe extérieure (29),
le compresseur (3) étant disposé dans une orientation telle que la section de connecteur (16) fait face à l'ouverture (21a, 21b) de manière à devenir accessible depuis l'extérieur de l'enveloppe extérieure (29) lorsque le couvercle (22a, 22b) est retiré.

2. Dispositif de pompe à chaleur (1b) selon la revendication 1, dans lequel
l'enveloppe extérieure (29) est constituée d'une pluralité d'éléments de panneau (9, 18, 19, 20, 23) comprenant un premier élément de panneau (20) et un deuxième élément de panneau (19),
l'ouverture (21b) est disposée dans le premier élément de panneau (20),
le couvercle (22b) est monté sur l'ouverture (21b) en étant fixé au premier élément de panneau (20) et
le deuxième élément de panneau (19) vient en butée contre le premier élément de panneau (20) de telle sorte que le deuxième élément de panneau (19) recouvre une partie de fixation du couvercle (22b) au premier élément de panneau (20).
